# FASCICULE DE BREVET EUROPEEN

(11) **EP 1 535 838 B1**
(45) Date de publication et mention de la délivrance du brevet: **19.04.2006**
(21) Numéro de dépôt: 04106022.9
(22) Date de dépôt: 23.11.2004
(51) Int. Cl.: B64D 27/26

(54) **Disporstif d'accrochage d'un moteur sous une voilure d'aéronef**
Aufhängung eines Triebwerks unter einer Flugzeugtragfläche
Suspension device for an engine unter an aircraft wing

(30) Priorité: 25.11.2003 FR 0350907
(43) Date de publication de la demande: 01.06.2005
(73) Titulaire: AIRBUS France, 31060 Toulouse (FR)
(72) Inventeur: MACHADO, Stéphane, 31270, VILLENEUVE TOLOSANE (FR); CASSAGNE, Jérôme, 31000, TOULOUSE (FR); DEL BLANCO, Anthony, 31300, TOULOUSE (FR); MARTIN, Yvon, 31590, BONREPOS RIQUET (FR); CHAMBREUIL, Arnaud, 31620 Labastide Saint Sernin (FR)
(74) Mandataire: Poulin, Gérard

(56) Documents cités:
- FR-A1- 2 738 034
- FR-A1- 2 836 672
- US-A- 3 042 349
- US-A- 3 831 888

## Description

### DOMAINE TECHNIQUE

La présente invention se rapporte à un dispositif apte à assurer l'accrochage ou la suspension d'un moteur sous une voilure d'aéronef, ce dispositif comprenant une structure rigide et des moyens d'accrochage de cette structure rigide sous la voilure.

Un tel dispositif peut être utilisé sur tout type d'aéronef comportant des moteurs suspendus à sa voilure, tels que des turboréacteurs ou des turbopropulseurs.

### ETAT DE LA TECHNIQUE ANTERIEURE

Sur les aéronefs existants, les moteurs sont suspendus au-dessous de la voilure par des dispositifs d'accrochage complexes, également appelés « EMS » (de l'anglais « Engine Mounting Structure »). Dans le cas des turboréacteurs, les dispositifs d'accrochage habituellement employés présentent une structure rigide du type caisson, également appelée « mât », c'est-à-dire formée par l'assemblage de longerons inférieurs et supérieurs raccordés entre-eux par une pluralité de nervures transversales. D'autre part, les dispositifs d'accrochage de turbopropulseurs sont quant à eux généralement constitués d'un caisson sous-aile arrière, prolongé par une structure en treillis, vers l'avant dans la direction longitudinale du turbopropulseur.

De façon connue, ces dispositifs sont notamment conçus pour permettre la transmission à la voilure des efforts statiques et dynamiques engendrés par les moteurs, tels que le poids, la poussée, ou encore les différents efforts dynamiques.

A ce titre, dans les dispositifs d'accrochage connus de l'art antérieur, la transmission des efforts entre celui-ci et la voilure est classiquement assurée par une attache avant, une attache arrière, ainsi qu'une attache intermédiaire notamment destinée à reprendre les efforts de poussée.

Pour ce faire, l'attache avant comprend deux groupes de manilles respectivement placés verticalement de chaque côté de la structure rigide. Chaque groupe de manilles relie une ferrure à double tête solidaire des longerons supérieurs de la structure rigide du dispositif, à une ferrure à double tête solidaire d'un longeron avant de la voilure. Les liaisons entre les groupes de manilles et les ferrures sont assurées par des axes orientés selon une direction transversale par rapport à l'aéronef, c'est-à-dire selon une direction orthogonale à la fois à la verticale et à l'axe longitudinal de cet aéronef.

L'attache arrière comporte deux paires de manilles triangulaires placées dans des plans verticaux orientés selon la direction transversale de l'aéronef. Ces deux paires de manilles triangulaires relient une ferrure double solidaire du longeron supérieur arrière de la structure rigide, à une ferrure solidaire d'un longeron intermédiaire de la voilure. Les liaisons entre les deux paires de manilles et les ferrures sont alors ici assurées par des axes orientés selon la direction longitudinale de l'aéronef.

L'attache intermédiaire destinée à reprendre les efforts de poussée, également appelée attache « spigot », est de façon générale matérialisée par une rotule d'axe vertical fixée dans le longeron supérieur arrière de la structure rigide, entre l'attache avant et l'attache arrière. Cette attache spigot est un pion de cisaillement fixé sous la voilure de l'aéronef, de façon à faire saillie verticalement dans la rotule susmentionnée.

Dans cet agencement classique et isostatique de l'art antérieur, les efforts longitudinaux (poussée, inverseurs) sont transmis par l'attache intermédiaire. Les efforts transversaux se répartissent entre cette même attache intermédiaire et l'attache arrière, tandis que les efforts selon la direction verticale passent simultanément par l'attache avant et l'attache arrière.

Par ailleurs, le moment selon l'axe longitudinal est repris par l'attache avant, et le moment selon l'axe transversal est repris dans la direction verticale par l'ensemble formé par les attaches avant et arrière. Enfin, le moment selon l'axe vertical est repris dans la direction transversale par l'ensemble formé par l'attache intermédiaire et l'attache arrière.

Si la solution qui vient d'être présentée permet de transmettre de façon satisfaisante les efforts statiques et dynamiques engendrés par le moteur dans toutes les conditions de vol, elle présente néanmoins des inconvénients non-négligeables.

Effectivement, il est indiqué que dans la mesure où la fonction principale de l'attache intermédiaire est de reprendre les efforts de poussée, celle-ci présente ainsi nécessairement un encombrement important ainsi qu'une masse relativement élevée. Naturellement, cela conduit inévitablement à une augmentation sensible de la masse globale du dispositif d'accrochage.

D'autre part, il est noté que la plaque de fixation solidaire du pion de cisaillement, requise pour assurer l'assemblage de ce dernier sous la voilure de l'aéronef, est une pièce de conception complexe et difficile à définir. Ceci s'explique bien évidemment en raison de la nécessité de faire coopérer cette plaque de fixation avec les éléments constitutifs de la structure de la voilure, c'est-à-dire principalement des longerons et des nervures.

### EXPOSÉ DE L'INVENTION

L'invention a donc pour but de proposer un dispositif d'accrochage d'un moteur sous une voilure d'aéronef, ce dispositif remédiant au moins partiellement aux inconvénients mentionnés ci-dessus relatifs aux réalisations de l'art antérieur.

Plus précisément, le but de l'invention est de présenter un dispositif d'accrochage d'un moteur sous une voilure d'aéronef, comprenant notamment des moyens d'accrochage de cette structure rigide sous la voilure, et dont la conception de ces moyens est sensiblement simplifiée par rapport à celle rencontrée antérieurement.

Pour ce faire, l'invention a pour objet un dispositif d'accrochage d'un moteur sous une voilure d'aéronef, le dispositif comportant une structure rigide et des moyens d'accrochage de cette structure rigide sous la voilure, les moyens d'accrochage comportant une attache avant, une attache intermédiaire ainsi qu'une attache arrière. Selon l'invention, l'attache avant présente, de part et d'autre d'un plan vertical passant par un axe longitudinal du moteur, au moins une manille triangulaire placée dans un plan vertical orienté selon une direction longitudinale de l'aéronef. De plus, l'attache intermédiaire comprend une bielle apte à transférer des efforts exercés dans une direction transversale de l'aéronef, et l'attache arrière comprend au moins une manille orientée selon une direction verticale de l'aéronef.

Avantageusement, la conception des moyens d'accrochage du dispositif selon l'invention est largement simplifiée par rapport à celle rencontrée dans les dispositifs d'accrochage de l'art antérieur. Ceci s'explique principalement en raison du fait que l'attache intermédiaire prévue dans l'invention n'est plus aussi complexe que celle du type attache spigot nécessitée antérieurement pour transférer des efforts de poussée dans la direction longitudinale de l'aéronef.

Effectivement, dans cet agencement isostatique de la présente invention, les efforts longitudinaux sont transmis par les deux demi-attaches de l'attache avant comprenant chacune au moins une manille triangulaire, les efforts transversaux sont transmis par l'attache intermédiaire composée essentiellement d'une simple et unique bielle, et les efforts selon la direction verticale passent simultanément par l'attache avant et l'attache arrière.

Ainsi, la suppression de cette attache spigot engendre inéluctablement une diminution considérable de la masse et de l'encombrement relatifs aux moyens d'accrochage, et par conséquent une baisse non-négligeable de la masse globale et du coût du dispositif d'accrochage. De plus, le fait de prévoir que l'attache intermédiaire est apte à transférer les efforts exercés dans la direction transversale implique que l'attache arrière peut alors être de conception extrêmement simple, à savoir réalisée de manière à assurer uniquement la reprise des efforts selon la direction verticale.

Préférentiellement, l'attache intermédiaire comporte en outre une ferrure inférieure solidaire de la structure rigide ainsi qu'une ferrure supérieure solidaire de la voilure de l'aéronef, et la bielle est montée sur les deux ferrures inférieure et supérieure, par exemple de façon articulée.

En outre, cette bielle peut être agencée dans un plan vertical orienté selon la direction transversale de l'aéronef, de manière à pouvoir reprendre du mieux possible les efforts exercés dans cette même direction transversale. A cet égard, on peut également prévoir que la bielle soit agencée selon cette direction transversale de l'aéronef.

De préférence, l'attache arrière comporte une paire de manilles orientées selon la direction verticale de l'aéronef, et l'attache avant comprend, de part et d'autre du plan vertical passant par l'axe longitudinal du moteur, une paire de manilles triangulaires placées dans des plans verticaux orientés selon la direction longitudinale de l'aéronef. Bien entendu, le fait de prévoir des paires de manilles permet d'obtenir des caractéristiques de résistance mécanique supérieures à celles obtenues avec des solutions mettant en oeuvre des manilles uniques.

On peut alors faire en sorte que la paire de manilles de l'attache arrière soit raccordée à la structure rigide et à la voilure de l'aéronef par l'intermédiaire d'axes orientés selon la direction longitudinale de cet aéronef. De la même façon, on peut aussi prévoir que chacune des deux paires de manilles triangulaires de l'attache avant est raccordée à la structure rigide et à la voilure de l'aéronef par l'intermédiaire d'axes orientés selon la direction transversale de cet aéronef.

De manière préférentielle, l'attache arrière comporte en outre une ferrure solidaire de la structure rigide, reliée à la paire de manilles par l'intermédiaire d'un axe orienté selon la direction longitudinale de cet aéronef, et l'attache arrière comporte également une ferrure solidaire de la voilure, reliée à la paire de manilles par l'intermédiaire d'un axe orienté selon cette même direction longitudinale.

De manière analogue, l'attache avant comporte de préférence deux ferrures solidaires de la structure rigide, chaque ferrure étant reliée à l'une des deux paires de manilles triangulaires par l'intermédiaire d'au moins un axe orienté selon la direction transversale de cet aéronef, et l'attache avant comporte également deux ferrures solidaires de la voilure, chaque ferrure étant reliée à l'une des deux paires de manilles triangulaires par l'intermédiaire d'au moins un axe orienté selon la direction transversale de cet aéronef.

En outre, pour l'attache avant, chaque manille triangulaire peut être raccordée à la structure rigide et à la voilure de l'aéronef à l'aide de trois axes la traversant, de préférence perpendiculairement, respectivement à proximité de ses trois sommets.

Selon un premier mode de réalisation préféré de la présente invention, au moins une manille triangulaire de la première attache est raccordée à la structure rigide par l'une de ses bases, et à la voilure par le sommet opposé à cette même base. En d'autres termes, au moins une manille triangulaire est agencée de sorte qu'elle s'étende verticalement vers le haut, de l'une de ses bases vers le sommet opposé à cette base.

Selon un second mode de réalisation préféré de la présente invention, au moins une manille triangulaire de la première attache est raccordée à la structure rigide par l'un de ses sommets, et à la voilure par la base opposée à ce même sommet. Ici aussi, cela veut dire qu'au moins une manille triangulaire est agencée de sorte qu'elle s'étende verticalement vers le bas, de l'une de ses bases vers le sommet opposé à cette base.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un dispositif d'accrochage d'un moteur sous une voilure d'aéronef, selon un premier mode de réalisation préféré de la présente invention ;
- la figure 2 représente une vue agrandie et éclatée en perspective d'une partie de l'attache avant du dispositif d'accrochage de la figure 1 ;
- la figure 3 représente une vue agrandie et éclatée en perspective de l'attache arrière du dispositif d'accrochage de la figure 1 ;
- la figure 4 représente une vue agrandie en perspective de l'attache intermédiaire du dispositif d'accrochage de la figure 1 ; et
- la figure 5 représente une vue partielle en perspective d'un dispositif d'accrochage d'un moteur sous une voilure d'aéronef, selon un second mode de réalisation préféré de la présente invention.

### EXPOSÉ DÉTAILLÉ DE MODES DE RÉALISATION PRÉFÉRÉS

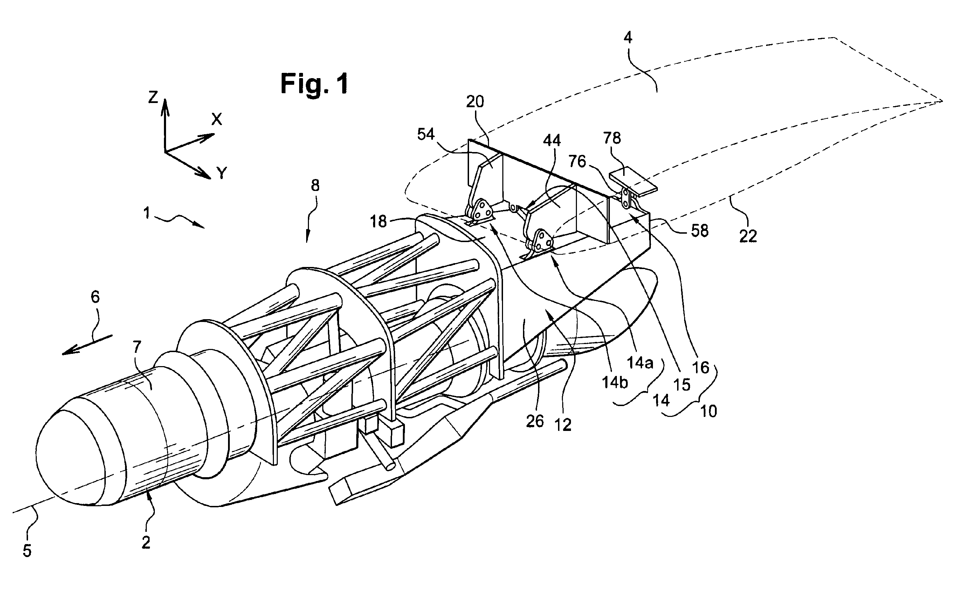

En référence à la figure 1, on voit un dispositif d'accrochage 1 selon un premier mode de réalisation préféré de la présente invention, ce dispositif 1 étant destiné à assurer la suspension d'un turbopropulseur 2 sous une aile d'aéronef représentée uniquement schématiquement pour des raisons évidentes de clarté, et désignée de façon générale par la référence numérique 4. Il est noté que le dispositif d'accrochage 1 représenté sur cette figure 1 est adapté pour coopérer avec un turbopropulseur 2, mais il pourrait bien entendu s'agir d'un dispositif conçu pour suspendre tout autre type de moteur, tel qu'un turboréacteur, sans sortir du cadre de l'invention.

Dans toute la description qui va suivre, par convention, on appelle X la direction parallèle à un axe longitudinal 5 du moteur 2, Y la direction orientée transversalement par rapport à l'aéronef, et Z la direction verticale, ces trois directions étant orthogonales entre-elles. Ainsi, il est à comprendre que les directions X, Y et Z correspondent respectivement à des directions longitudinale, transversale et de hauteur, à la fois pour l'aéronef et pour le moteur 2.

Il est précisé que l'axe longitudinal 5 du moteur 2 est à comprendre comme étant l'axe longitudinal du carter moteur, et non l'axe longitudinal de son hélice propulsive 7.

D'autre part, les termes « avant » et « arrière » sont à considérer par rapport à une direction d'avancement de l'aéronef rencontrée suite à la poussée exercée par les moteurs 2, cette direction étant représentée schématiquement par la flèche 6.

Sur la figure 1, on peut voir que seule une structure rigide 8 du dispositif d'accrochage 1 a été représentée, accompagnée de moyens d'accrochage 10 de cette structure rigide 8 sous la voilure 4 de l'aéronef, ces moyens 10 appartenant naturellement au dispositif d'accrochage 1. Les autres éléments constitutifs non-représentés de ce dispositif 1, du type structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

De la même manière, la structure rigide 8 étant similaire à celles rencontrées dans les dispositifs de l'art antérieur, et présentant de toute façon une conception spécifique et différente en fonction de la nature du moteur qu'elle doit suspendre, elle ne sera par conséquent pas davantage décrite.

En revanche, les moyens d'accrochage 10, situés globalement vers l'arrière de la structure rigide 8, et plus précisément au niveau d'un caisson sous-aile 12 dans le cas représenté d'une structure rigide d'un turbopropulseur, sont spécifiques à la présente invention, et vont donc être présentés de façon détaillée ci-dessous.

De façon générale, les moyens d'attache 10 sont constitués d'une attache avant 14, d'une attache intermédiaire 15 ainsi que d'une attache arrière 16, l'attache intermédiaire 15 étant placée entre les attaches avant et arrière 14,16. Comme cela sera exposé en détails ci-dessous, l'attache avant 14 relie un longeron supérieur 18 du caisson sous-aile 12 de la structure rigide 8, à un longeron vertical avant 20 faisant partie intégrante de la structure de l'aile 4 et s'étendant sensiblement selon une direction principale longitudinale (non représentée) de cette même aile 4. L'attache intermédiaire 15 relie quant à elle également le longeron supérieur 18 du caisson sous-aile 12 au longeron vertical avant 20 de l'aile 4.

D'autre part, l'attache arrière 16 relie une extrémité arrière du longeron supérieur 18 du caisson sous-aile 12, à une nervure horizontale (non représenté) sensiblement perpendiculaire à un longeron principal de voilure (non représenté) faisant partie intégrante de la structure de l'aile 4.

Comme on peut l'apercevoir sur la figure 1, l'attache avant 14 est en fait composée de deux demi-attaches 14a et 14b, sensiblement identiques, disposées de part et d'autre d'un plan vertical (non représenté) passant par l'axe longitudinal 5 du moteur, et agencées de préférence symétriquement par rapport à ce même plan. Pour cette raison, une seule des deux demi-attaches 14a,14b va être détaillée ci-après.

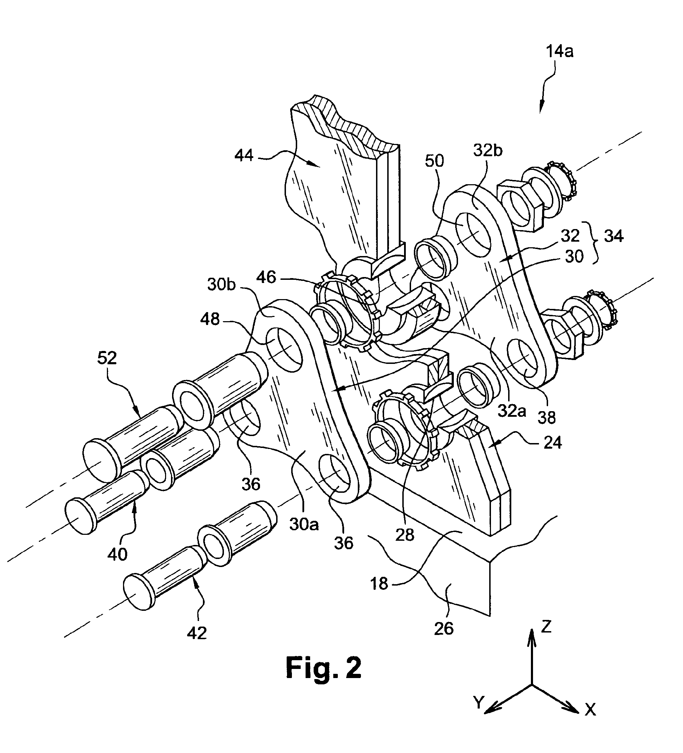

En référence plus spécifiquement à la figure 2, on voit que la demi-attache 14a comporte tout d'abord une ferrure 24, de préférence double, et solidaire du longeron 18 de caisson sous-aile 12. Cette ferrure 24 s'étend dans un plan vertical orienté selon la direction longitudinale X, à savoir selon un plan XZ, quasiment dans le prolongement d'un flan latéral 26 du caisson sous-aile 12. En outre, elle est percée de deux trous traversants 28 (un seul étant visible sur la figure 2), orientés selon la direction transversale Y de l'aéronef.

Deux manilles triangulaires 30 et 32, de préférence identiques et prenant grossièrement la forme d'un triangle équilatéral, sont respectivement agencées de part et d'autre de cette ferrure 24, également dans des plans XZ. Ainsi, la manille extérieure 30 et la manille intérieure 32 forment ensemble une paire de manilles triangulaires 34, dont les manilles 30,32 sont parallèles entre-elles. A ce titre, il est précisé que la paire de manilles triangulaires 34 pourrait également être réalisée à l'aide de manilles doubles, sans sortir du cadre de l'invention. Dans un tel cas, la paire de manilles 34 comporterait alors quatre manilles identiques réparties en deux ensembles de deux manilles triangulaires superposées, respectivement agencés de chaque côté de la ferrure 24.

Dans ce premier mode de réalisation préféré de la présente invention, la manille extérieure 30 est agencée de sorte que c'est l'une de ses bases 30a qui est montée sur la ferrure 24, cette base 30a étant orientée sensiblement selon la direction longitudinale X. De cette manière, on peut alors comprendre que la manille 30 est placée de sorte qu'elle s'étende verticalement vers le haut selon la direction Z, de sa base 30a, vers un sommet opposé 30b à cette base 30a.

Ainsi, à proximité de chacun des deux sommets (non référencés) associés à cette base 30a, il est réalisé un trou traversant 36, orienté selon la direction transversale Y. De la même manière, la manille intérieure 32 est agencée de façon identique à celle de la manille extérieure 30, à savoir que c'est l'une de ses bases 32a qui est montée sur la ferrure 24, et que cette base 32a est orientée sensiblement selon la direction longitudinale X. Par conséquent, ici aussi, il est pratiqué un trou traversant 38 orienté selon la direction transversale Y, à proximité de chacun des deux sommets (non référencés) associés à cette base 32a.

Pour assurer la liaison entre la paire de manilles 34 et la ferrure 24, la demi-attache 14a comporte alors deux axes 40 et 42 orientés selon la direction transversale Y, et disposés dans un même plan horizontal XY. En effet, l'axe avant 40, de préférence double comme représenté sur la figure 2, traverse successivement l'un des deux trous traversants 36 de la manille triangulaire extérieure 30, l'un des deux trous traversants 28 pratiqués dans la ferrure 24, ainsi que l'un des deux trous traversants 38 de la manille triangulaire intérieure 32. De manière analogue, l'axe arrière 42, de préférence également double, traverse successivement l'autre des deux trous traversants 36 de la manille triangulaire extérieure 30, l'autre des deux trous traversants 28 pratiqués dans la ferrure 24, ainsi que l'autre des deux trous traversants 38 de la manille triangulaire intérieure 32.

Par ailleurs, la demi-attache 14a est pourvue d'une autre ferrure 44 orientée dans un plan vertical XZ et prenant la forme d'une nervure de la structure de l'aile 4, cette nervure 44 étant solidaire du longeron 20 comme cela est clairement visible sur la figure 1. Dans une partie avant inférieure de cette ferrure 44 orientée verticalement selon la direction longitudinale X, celle-ci est percée d'un trou unique traversant 46, orienté selon la direction transversale Y de l'aéronef.

Pour assurer la fixation de la paire de manilles triangulaires 34 sur cette ferrure 44, la manille extérieure 30 dispose d'un trou traversant 48 orienté selon la direction transversale Y, ce trou 48 étant pratiqué à proximité du sommet 30b opposé à la base 30a susmentionnée. De manière analogue, la manille intérieure 32 dispose d'un trou traversant 50 orienté selon la direction transversale Y, ce trou 50 étant pratiqué à proximité d'un sommet 32b opposé à la base 32a indiquée précédemment.

Avec un tel agencement, un axe supérieur 52 orienté selon la direction transversale Y, disposé au-dessus des axes 40 et 42 et étant de préférence double comme représenté sur la figure 2, peut alors assurer la liaison entre la paire de manilles 34 et la ferrure 44, en traversant successivement le trou traversant 48 de la manille triangulaire extérieure 30, le trou traversant 46 de la ferrure 44, ainsi que le trou traversant 50 de la manille triangulaire intérieure 32.

Comme cela a été mentionné ci-dessus, la demi-attache 14b ne va pas être davantage décrite, dans la mesure où seule la longueur selon la direction X de sa ferrure 54 interposée entre le longeron 20 et la paire de manilles triangulaires (non référencée), diffère par rapport à la longueur selon la direction X de la ferrure 44 de la demi-attache 14a. Bien entendu, cela s'explique par le positionnement du longeron 20 de l'aile 4, qui se trouve dans un plan vertical incliné par rapport à un plan YZ.

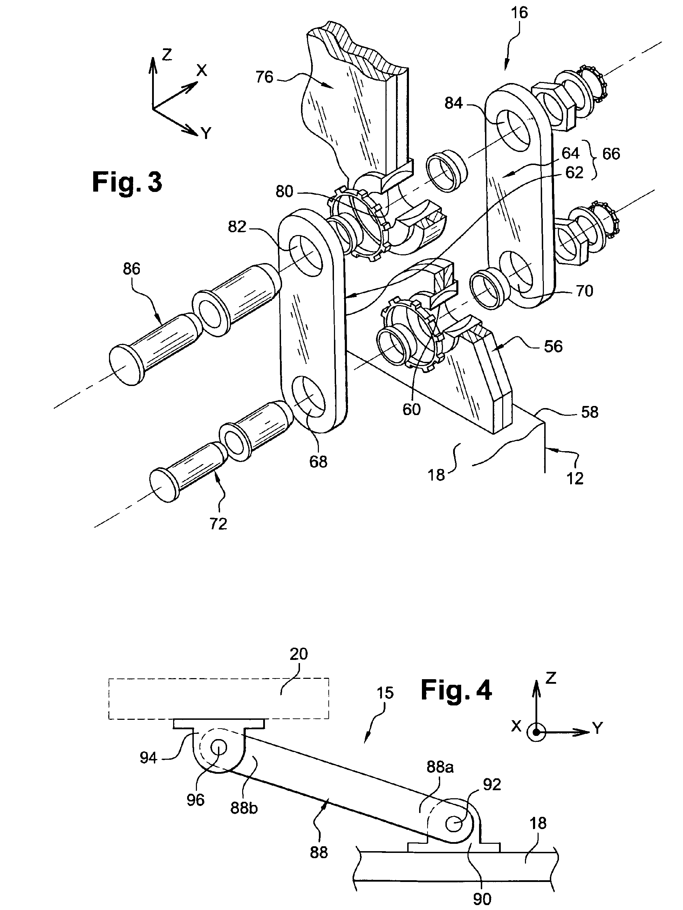

En référence à présent à la figure 3, on voit que l'attache arrière 16 comporte une ferrure 56 solidaire d'une extrémité arrière du longeron 18 du caisson sous-aile 12. Cette ferrure 56 s'étend dans un plan vertical orienté selon la direction transversale Y, à savoir dans un plan YZ, quasiment dans le prolongement d'une cloison verticale arrière 58 du caisson sous-aile 12. De plus, la ferrure 56 présente une symétrie par rapport au plan vertical passant par l'axe longitudinal 5 du moteur 2.

Cette ferrure 56 est percée d'un trou traversant 60 coupé diamétralement par le plan vertical passant par l'axe longitudinal 5 susmentionné, et orienté selon la direction longitudinale X de l'aéronef.

Deux manilles simple 62 et 64, de préférence identiques et prenant grossièrement la forme d'un rectangle aux largeurs arrondies, sont respectivement agencées de part et d'autre de cette ferrure 56, également dans des plans YZ. Ainsi, la manille avant 62 et la manille arrière 64 forment ensemble une paire de manilles 66, dont les manilles 62,64 sont parallèles entre-elles. A ce titre, il est précisé que la paire de manilles 66 pourrait ici aussi être réalisée à l'aide de manilles doubles, sans sortir du cadre de l'invention.

A proximité d'une extrémité inférieure (non référencée) de la manille avant 62, il est réalisé un trou traversant 68, orienté selon la direction longitudinale X. De la même manière, la manille arrière 64 est agencée de façon identique à celle de la manille avant 62, à savoir selon la direction verticale Z. Ici aussi, il est pratiqué un trou traversant 70 orienté selon la direction longitudinale X, à proximité de l'extrémité inférieure (non référencée) de la manille arrière 64.

Pour assurer la liaison entre la paire de manilles 66 et la ferrure 56, l'attache arrière 16 comporte alors un axe inférieur 72 orienté selon la direction longitudinale X. Cet axe inférieur 72, de préférence double comme représenté sur la figure 3, traverse alors successivement le trou traversant 68 de la manille avant 62, le trou traversant 60 pratiqué dans la ferrure 56, ainsi que le trou traversant 70 de la manille arrière 64.

Par ailleurs, l'attache arrière 16 est pourvue d'une autre ferrure 76 orientée globalement dans un plan vertical YZ et se prolongeant vers le haut par une plaque horizontale 78, cette plaque 78 étant solidaire de la nervure horizontale sensiblement perpendiculaire au longeron principal de l'aile 4. Par conséquent, la ferrure 76 traverse un revêtement d'intrados 22 de l'aile 4, ou bien se rapporte sur ce même revêtement 22 en liaison avec la nervure horizontale.

Dans une partie inférieure, cette ferrure 76 est percée d'un trou unique traversant 80, orienté selon la direction longitudinale X de l'aéronef.

Pour assurer la fixation de la paire de manilles 66 sur cette ferrure 76, la manille avant 62 dispose d'un trou traversant 82 orienté selon la direction longitudinale X, ce trou 82 étant pratiqué à proximité d'une extrémité supérieure (non référencée) de cette manille avant 62. De manière analogue, la manille arrière 64 dispose d'un trou traversant 84 orienté selon la direction longitudinale X, ce trou 84 étant pratiqué à proximité d'une extrémité supérieure (non référencée) de cette manille arrière 64.

Avec un tel agencement, un axe supérieur 86, disposé au-dessus de l'axe 72 et étant de préférence double comme représenté sur la figure 3, peut alors assurer la liaison entre la paire de manilles 66 et la ferrure 76, en traversant successivement le trou traversant 82 de la manille avant 62, le trou traversant 80 de la ferrure 76, ainsi que le trou traversant 84 de la manille arrière 64.

En référence à présent à la figure 4, on peut voir que l'attache intermédiaire 15 comporte principalement une bielle 88 de reprise des efforts exercés selon la direction transversale Y, cette bielle 88 étant située dans un plan vertical YZ, et de préférence agencée selon cette même direction transversale Y ou encore de façon légèrement inclinée par rapport à cette direction Y, comme cela est représenté sur la figure 4.

L'attache intermédiaire 15 est en outre pourvue d'une ferrure inférieure 90 solidaire du longeron 18 du caisson sous-aile 12, la ferrure 90 étant de préférence à double tête, et donc percée de deux trous traversants (non référencés) alignés dans la direction longitudinale X. Une première extrémité 88a de la bielle 88 est ainsi montée de façon articulée sur cette ferrure 90, par l'intermédiaire d'un axe 92 orienté selon la direction longitudinale X.

Par ailleurs, l'attache intermédiaire 15 est pourvue d'une ferrure supérieure 94 solidaire du longeron 20 de la structure de l'aile 4, la ferrure 94 étant également de préférence à tête double, et donc percée de deux trous traversants (non référencés) alignés dans la direction longitudinale X. Une seconde extrémité 88b de la bielle 88 est alors montée de façon articulée sur cette ferrure 94, par l'intermédiaire d'un axe 96 orienté selon la direction longitudinale X.

Enfin, on peut prévoir que la bielle 88 soit traversée sensiblement en son milieu par le plan vertical passant par l'axe longitudinal 5 du turbopropulseur 2.

Dans cet agencement isostatique de la présente invention, les efforts longitudinaux (poussée, inverseurs) sont transmis par l'attache avant 14. Les efforts transversaux sont transmis par l'attache intermédiaire 15, tandis que les efforts selon la direction verticale passent simultanément par l'attache avant 14 et l'attache arrière 16. Il est noté qu'avec une telle configuration, les efforts longitudinaux transitent directement par les nervures 44 et 54 de la structure de l'aile 4, ces nervures 44 et 54 étant situées globalement vers l'arrière par rapport aux demi-attaches 14a,14b.

Par ailleurs, le moment selon l'axe longitudinal est repris dans la direction verticale par les deux demi-attaches 14a,14b de l'attache avant 14, et le moment selon l'axe transversal est repris également dans la direction verticale par l'ensemble formé par les attaches avant 14 et arrière 16. Enfin, le moment selon l'axe vertical est repris dans la direction longitudinale par les deux demi-attaches 14a,14b de l'attache avant 14.

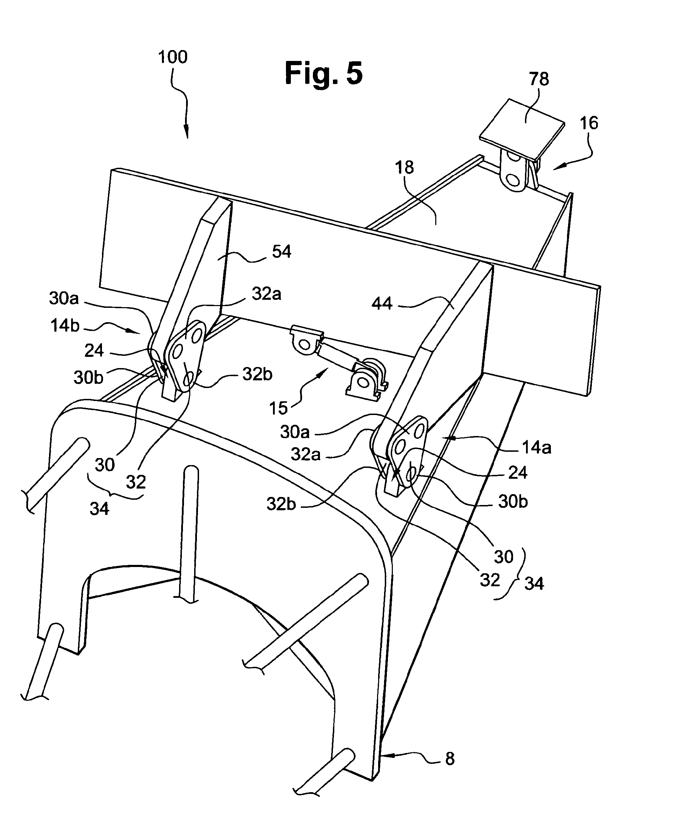

En référence à présent à la figure 5, on voit une partie d'un dispositif d'accrochage 100 selon un second mode de réalisation préféré de la présente invention. Ce dispositif 100 est sensiblement identique au dispositif 1 selon le premier mode de réalisation décrit ci-dessus. Par conséquent, les éléments portant les mêmes références numériques correspondent à des éléments identiques ou similaires.

Ainsi, on peut voir sur cette figure 5 que le changement entre les dispositifs d'accrochage 1 et 100 réside dans la disposition de manilles triangulaires appartenant à l'attache avant 14 des moyens d'accrochage 10.

Effectivement, si l'ensemble des manilles triangulaires 30 et 32 du dispositif 1 étaient situées de sorte qu'elles s'étendent verticalement vers le haut, de l'une de leurs bases vers le sommet opposé à cette base, ces mêmes manilles triangulaires du dispositif 100 s'étendent ici également verticalement, mais de l'une de leurs bases vers le sommet opposé à cette base en allant vers le bas. En d'autres termes, les manilles triangulaires 30,32 des paires de manilles 34 ont été pivotées de 180° selon la direction transversale Y, par rapport à leurs positions occupées dans le premier mode de réalisation préféré.

Par conséquent, comme cela est clairement visible sur la figure 5, les bases 30a et 32a des deux demi-attaches 14a,14b de l'attache avant 14 sont reliées aux ferrures 44 et 54 de l'aile 4, et les sommets opposés 30b et 32b sont reliés aux ferrures 24 solidaires de la structure rigide 8.

Bien entendu, diverses modifications peuvent être apportées par l'homme du métier aux dispositifs d'accrochage 1 et 100 qui viennent d'être décrits, uniquement à titre d'exemples non limitatifs.

## Revendications

1. Dispositif d'accrochage (1,100) d'un moteur (2) sous une voilure (4) d'aéronef, ledit dispositif comportant une structure rigide (8) et des moyens d'accrochage (10) de ladite structure rigide (8) sous la voilure (4), lesdits moyens d'accrochage (10) comportant une attache avant (14), une attache intermédiaire (15) ainsi qu'une attache arrière (16), **caractérisé en ce que** ladite attache avant (14) présente, de part et d'autre d'un plan vertical passant par un axe longitudinal (5) du moteur (2), au moins une manille triangulaire (30,32) placée dans un plan vertical orienté selon une direction longitudinale (X) de l'aéronef, **en ce que** ladite attache intermédiaire (15) comprend une bielle (88) apte à transférer des efforts exercés dans une direction transversale (Y) de l'aéronef, et **en ce que** ladite attache arrière (16) comprend au moins une manille (62,64) orientée selon une direction verticale (Z) de l'aéronef.

2. Dispositif d'accrochage (1,100) d'un moteur (2) selon la revendication 1, **caractérisé en ce que** ladite attache intermédiaire (15) comporte en outre une ferrure inférieure (90) solidaire de la structure rigide (8) ainsi qu'une ferrure supérieure (94) solidaire de la voilure (4) de l'aéronef, et **en ce que** ladite bielle (88) est montée sur les deux ferrures inférieure et supérieure (90,94).

3. Dispositif d'accrochage (1,100) d'un moteur (2) selon la revendication 2, **caractérisé en ce que** ladite bielle (88) est montée sur les deux ferrures inférieure et supérieure (90,94) de façon articulée.

4. Dispositif d'accrochage (1,100) d'un moteur (2) selon l'une quelconque des revendications précédentes, **caractérisé en ce que** ladite bielle (88) est agencée dans un plan vertical orienté selon la direction transversale (Y) de l'aéronef.

5. Dispositif d'accrochage (1,100) d'un moteur (2) selon la revendication 4, **caractérisé en ce que** ladite bielle (88) est agencée selon la direction transversale (Y) de l'aéronef.

6. Dispositif d'accrochage (1,100) d'un moteur (2) selon l'une quelconque des revendications précédentes, **caractérisé en ce que** ladite attache arrière (16) comporte une paire de manilles (66) orientées selon la direction verticale (Z) de l'aéronef, et **en ce que** ladite attache avant (14) comprend, de part et d'autre du plan vertical passant par l'axe longitudinal (5) du moteur (2), une paire de manilles triangulaires (34) placées dans des plans verticaux orientés selon la direction longitudinale (X) de l'aéronef.

7. Dispositif d'accrochage (1,100) d'un moteur (2) selon la revendication 6, **caractérisé en ce que** ladite paire de manilles (66) de l'attache arrière (16) est raccordée à la structure rigide (8) et à la voilure (4) de l'aéronef par l'intermédiaire d'axes (72,86) orientés selon la direction longitudinale (X) de cet aéronef.

8. Dispositif d'accrochage (1,100) d'un moteur (2) selon la revendication 6 ou la revendication 7, **caractérisé en ce que** chacune des deux paires de manilles triangulaires (34) de l'attache avant (14) est raccordée à la structure rigide (8) et à la voilure (4) de l'aéronef par l'intermédiaire d'axes (40,42,52) orientés selon la direction transversale (Y) de cet aéronef.

9. Dispositif d'accrochage (1,100) d'un moteur (2) selon l'une quelconque des revendications 6 à 8, **caractérisé en ce que** ladite attache arrière (16) comporte en outre une ferrure (56) solidaire de la structure rigide (8), reliée à ladite paire de manilles (66) par l'intermédiaire d'un axe (72) orienté selon la direction longitudinale (X) de cet aéronef, et **en ce que** ladite attache arrière (16) comporte également une ferrure (76) solidaire de la voilure (4), reliée à ladite paire de manilles (66) par l'intermédiaire d'un axe (86) orienté selon la direction longitudinale (X) de cet aéronef.

10. Dispositif d'accrochage (1,100) d'un moteur (2) selon l'une quelconque des revendications 6 à 9, **caractérisé en ce que** ladite attache avant (14) comporte en outre deux ferrures (24) solidaires de la structure rigide (8), chaque ferrure (24) étant reliée à l'une des deux paires de manilles triangulaires (34) par l'intermédiaire d'au moins un axe (40,42) orienté selon la direction transversale (Y) de cet aéronef, et **en ce que** ladite attache avant (14) comporte également deux ferrures (44,54) solidaires de la voilure (4), chaque ferrure (44,54) étant reliée à l'une des deux paires de manilles triangulaires (34) par l'intermédiaire d'au moins un axe (52) orienté selon la direction transversale (Y) de cet aéronef.

11. Dispositif d'accrochage (1,100) d'un moteur (2) selon l'une quelconque des revendications précédentes, **caractérisé en ce que** chaque manille triangulaire (30,32) de la première attache (14) est raccordée à la structure rigide (8) et à la voilure (4) de l'aéronef à l'aide de trois axes (40,42,52) la traversant, respectivement à proximité de ses trois sommets (30b,32b).

12. Dispositif d'accrochage (1) d'un moteur (2) selon l'une quelconque des revendications précédentes, **caractérisé en ce qu'**au moins une manille triangulaire (30,32) de la première attache (14) est raccordée à la structure rigide (8) par l'une de ses bases (30a,32a), et à la voilure (4) par le sommet (30b,32b) opposé à cette même base.

13. Dispositif d'accrochage (100) d'un moteur selon l'une quelconque des revendications 1 à 12, **caractérisé en ce qu'**au moins une manille triangulaire (30,32) de la première attache (14) est raccordée à la structure rigide (8) par l'un de ses sommets (30b,32b), et à la voilure (4) par la base (30a,32a) opposée à ce même sommet.

## Patentansprüche

1. Aufhängungsvorrichtung (1,100) eines Triebwerks (2) unter einem Tragwerk (4) eines Luftfahrzeugs, wobei die Vorrichtung eine starre Struktur (8) sowie Aufhängungsmittel (10) der starren Struktur (8) unter dem Tragwerk (4) aufweist und die Aufhängungsmittel (10) eine vordere Befestigung (14), eine Zwischenbefestigung (15) sowie eine hintere Befestigung (16) umfassen, **dadurch gekennzeichnet, dass** die vordere Befestigung (14) beiderseits einer vertikalen Ebene, die durch eine Längsachse (5) des Triebwerks (2) verläuft, mindestens einen dreieckigen Schäkel bzw. Kuppelungsbügel (30,32) aufweist, der in einer in einer Longitudinalrichtung (X) des Luftfahrzeugs orientierten Vertikalebene angebracht ist, dass die Zwischenbefestigung (15) eine Kurbel (88) umfasst, die in einer Transversalrichtung (Y) des Luftfahrzeugs wirkende Kräfte übertragen kann, und dass die hintere Befestigung (16) mindestens einen in einer Vertikalrichtung (Z) des Luftfahrzeugs ausgerichteten Schäkel bzw. Kupplungsbügel (62,64) umfasst.

2. Aufhängungsvorrichtung (1,100) eines Triebwerks (2) nach Anspruch 1, **dadurch gekennzeichnet, dass** die Zwischenbefestigung (15) außerdem ein unteres Beschlagteil (90) umfasst, das mit der starren Struktur (8) einstückig ist, sowie ein oberes Beschlagteil (94), das mit dem Tragwerk (4) des Luftfahrzeugs einstückig ist, und dass die Kurbel (88) an den beiden unteren und oberen Beschlagteilen (90,94) angebracht ist.

3. Aufhängungsvorrichtung (1,100) eines Triebwerks (2) nach Anspruch 2, **dadurch gekennzeichnet, dass** die Kurbel (88) an den beiden unteren und oberen Beschlagteilen (90,94) gelenkig angebracht ist.

4. Aufhängungsvorrichtung (1,100) eines Triebwerks (2) nach einem der vorangehenden Ansprüche, **dadurch gekennzeichnet, dass** die Kurbel (88) in einer in der Transversalrichtung (Y) des Luftfahrzeugs ausgerichteten Vertikalebene angeordnet ist.

5. Aufhängungsvorrichtung (1,100) eines Triebwerks (2) nach Anspruch 4, **dadurch gekennzeichnet, dass** die Kurbel (88) in der Transversalrichtung (Y) des Luftfahrzeugs angeordnet ist.

6. Aufhängungsvorrichtung (1,100) eines Triebwerks (2) nach einem der vorangehenden Ansprüche, **dadurch gekennzeichnet, dass** die hintere Befestigung (16) ein Paar Schäkel (66) umfasst, die in der Vertikalrichtung (Z) des Luftfahrzeugs ausgerichtet sind, und dass die vordere Befestigung (14) auf beiden Seiten der durch die Longitudinalachse (5) des Triebwerks (2) verlaufenden Vertikalebene ein Paar dreieckiger Schäkel (34) umfasst, die in Vertikalebenen angebracht sind, welche in der Longitudinalrichtung (X) des Luftfahrzeugs ausgerichtet sind.

7. Aufhängungsvorrichtung (1,100) eines Triebwerks (2) nach Anspruch 6, **dadurch gekennzeichnet, dass** das Schäkelpaar (66) der hinteren Befestigung (16) mit der starren Struktur (8) und mit dem Tragwerk (4) des Luftfahrzeugs über Achsen (72,86) verbunden ist, die in der Longitudinalrichtung (X) dieses Luftfahrzeugs ausgerichtet sind.

8. Aufhängungsvorrichtung (1,100) eines Triebwerks (2) nach Anspruch 6 oder Anspruch 7, **dadurch gekennzeichnet, dass** jedes der Paare dreieckiger Schäkel (34) der vorderen Befestigung (14) mit der starren Struktur (8) und dem Tragwerk (4) des Luftfahrzeugs über Achsen (40,42,52) verbunden ist, die in einer Transversalrichtung (Y) dieses Luftfahrzeugs ausgerichtet sind.

9. Aufhängungsvorrichtung (1,100) eines Triebwerks (2) nach einem der Ansprüche 6 bis 8, **dadurch gekennzeichnet, dass** die hintere Befestigung (16) außerdem ein mit der starren Struktur (8) einstückiges Beschlagteil (56) umfasst, das mit dem Paar Schäkel (66) über eine in der Longitudinalrichtung (X) dieses Luftfahrzeugs ausgerichtete Zwischenachse (72) verbunden ist, und dass die hintere Befestigung (16) auch ein mit dem Tragwerk (4) einstückiges Beschlagteil (76) umfasst, das mit dem Paar Schäkel (66) über eine in der Longitudinalrichtung (X) dieses Luftfahrzeugs ausgerichtete Achse (86) verbunden ist.

10. Aufhängungsvorrichtung (1,100) eines Triebwerks (2) nach einem der Ansprüche 6 bis 9, **dadurch gekennzeichnet, dass** die vordere Befestigung (14) außerdem zwei Beschlagteile (24) umfasst, die einstückig mit der starren Struktur (8) sind, wobei jedes Beschlagteil (24) mit einem der beiden Paare dreieckiger Schäkel (34) über mindestens eine Achse (40,42) verbunden ist, die in der Transversalrichtung (Y) dieses Luftfahrzeugs ausgerichtet ist, und dass die vordere Befestigung (14) auch zwei mit dem Tragwerk (4) einstückige Beschlagteile (44,54) aufweist, wobei jedes Beschlagteil (44,54) mit einem der beiden Paare dreieckiger Schäkel (34) über mindestens eine Achse (52) verbunden ist, die in einer Transversalrichtung (Y) dieses Luftfahrzeugs ausgerichtet ist.

11. Aufhängungsvorrichtung (1,100) eines Triebwerks (2) nach einem der vorangehenden Ansprüche, **dadurch gekennzeichnet, dass** jeder der dreieckigen Schäkel (30,32) der ersten Befestigung (14) mit der starren Struktur (8) und dem Tragwerk (4) des Luftfahrzeugs mittels dreier Achsen (49,42,52) verbunden ist, die diese jeweils in Nähe ihrer drei Scheitel (30B,32B) durchsetzen.

12. Aufhängungsvorrichtung (1) eines Triebwerks (2) nach einem der vorangehenden Ansprüche, **dadurch gekennzeichnet, dass** mindestens ein dreieckiger Schäkel (30,32) der ersten Befestigung (14) mit der starren Struktur (8) über eine seiner Basen (30A,32A) sowie mit dem Tragwerk (4) über den dieser Basis gegenüberliegenden Scheitel (30B,32B) verbunden ist.

13. Aufhängungsvorrichtung (100) eines Triebwerks (2) nach einem der vorangehenden Ansprüche 1 bis 12, **dadurch gekennzeichnet, dass** mindestens ein dreieckiger Schäkel (30,32) der ersten Befestigung (14) mit der starren Struktur (8) über einen seiner Scheitel (30B,32B) verbunden ist, und mit dem Tragwerk (4) über die diesem Scheitel gegenüberliegende Basis (30A,32A) verbunden ist.

## Claims

1. Mounting structure (1, 100) for mounting an engine (2) under an aircraft wing (4), said structure comprising a rigid structure (8) and means (10) of fastening this rigid structure under the wing (4), said mounting means (10) comprising a forward fastener (14), an intermediate fastener (15) and an aft fastener (16), **characterised in that** said forward fastener (14) has at least one triangular shackle (30, 32) placed on each side of a vertical plane passing through a longitudinal axis (5) of the engine (2), placed in a Vertical plane oriented along a longitudinal direction (X) of the aircraft, **in that** said intermediate fastener (15) comprises a connecting rod (88) capable of transferring forces applied in a direction (Y) transverse to the aircraft, and **in that** said aft fastener (16) comprises at least one shackle (62, 64) oriented along a vertical direction (Z) of the aircraft.

2. Mounting structure (1, 100) according to claim 1 for mounting an engine (2), **characterised in that** said intermediate fastener (15) is also provided with an inner fitting (90) fixed to the rigid structure (8) and an upper fitting (94) fixed to the wing (4) of the aircraft, and **in that** said connecting rod (88) is mounted on the two lower and upper fittings (90, 94).

3. Mounting structure (1, 100) according to claim 2 for mounting an engine (2), **characterised in that** said connecting rod (88) is mounted articulated on the two lower and upper fittings (90, 94).

4. Mounting structure (1, 100) according to any one of the above claims for mounting an engine (2), **characterised in that** said connecting rod (88) is placed in a vertical plane oriented along the transverse direction (Y) of the aircraft.

5. Mounting structure (1, 100) according to claim 4 for mounting an engine (2), **characterised in that** said connecting rod (88) is arranged along the transverse direction (Y) of the aircraft.

6. Mounting structure (1, 100) according to any one of the above claims for mounting an engine (2), **characterised in that** said aft fastener (16) comprises a pair of shackles (66) oriented along the vertical direction (Z) of the aircraft, and **in that** the forward fastener (14) comprises a pair of triangular shackles (34) on each side of the vertical plane passing through the longitudinal axis (5) of the engine (2), placed in vertical planes oriented along the longitudinal direction (X) of the aircraft.

7. Mounting structure (1, 100) according to claim 6 for mounting an engine (2), **characterised in that** said pair of shackles (66) of the aft fastener (16) is connected to the rigid structure (8) and to the wing (4) of the aircraft, through axes (72, 86) oriented along the longitudinal direction (X) of this aircraft.

8. Mounting structure (1, 100) according to either claim 6 or 7 for mounting an engine (2), **characterised in that** each of the two pairs of triangular shackles (34) of the forward fastener (14) is connected to the rigid structure (8) and to the wing (4) of the aircraft through axes (40, 42, 52) oriented along the transverse direction (Y) of this aircraft.

9. Mounting structure (1, 100) according to any one of claims 6 to 8 for mounting an engine (2), **characterised in that** said aft fastener (16) also comprises a fitting (56) fixed to the rigid structure (8) connected to said pair of shackles (66) through an axis (72) oriented along the longitudinal direction (X) of this aircraft, and **in that** said aft fastener (16) also comprises a fitting (76) fixed to the wing (4), connected to said pair of shackles (66) through an axis (86) oriented along the longitudinal direction (X) of this aircraft.

10. Mounting structure (1, 100) according to any one of claims 6 to 9 for mounting an engine (2), **characterised in that** said forward fastener (14) also comprises two fittings (24) fixed to the rigid structure (8), each fitting (24) being connected to one of the two pairs of triangular shackles (34) through at least one axis (40, 42) oriented along the transverse direction (Y) of this aircraft, and **in that** said forward fastener (14) also comprises two fittings (44, 54) fixed to the wing (4), each fitting (44, 54) being connected to one of the two pairs of triangular shackles (34) through at least one axis (52) oriented along the transverse direction (Y) of this aircraft.

11. Mounting structure (1, 100) according to any one of the above claims for mounting an engine (2), **characterised in that** each triangular shackle (30, 32) of the first fastener (14) is connected to the rigid structure (8) and to the aircraft wing (4) through three axes (40, 42, 52) passing through it, close to each of its three vertices (30b, 32b).

12. Mounting structure (1) according to any one of the above claims for mounting an engine (2), **characterised in that** at least one triangular shackle (30, 32) of the first fastener (14) is connected to the rigid structure (8) at one of its bases (30a, 32a), and to the wing (4) by the vertex (30b, 32b) opposite this base.

13. Mounting structure (100) according to any one of claims 1 to 12 for mounting an engine (2), **characterised in that** at least one triangular shackle (30, 32) of the first fastener (14) is connected to the rigid structure (8) at one of its vertices (30b, 32b), and to the wing (4) at the base (30a, 32a) opposite this vertex.
